(19)

**Europäisches Patentamt**
**European Patent Office**
**Office européen des brevets**

(11)  **EP 4 641 495 A1**

(12)  **EUROPEAN PATENT APPLICATION**
published in accordance with Art. 153(4) EPC

(43) Date of publication:
**29.10.2025  Bulletin 2025/44**

(21) Application number: **23905732.6**

(22) Date of filing: **08.12.2023**

(51) International Patent Classification (IPC):
**G06T 7/194** (2017.01)   **G06T 5/00** (2024.01)
**G06T 3/40** (2024.01)   **G06N 3/0464** (2023.01)

(86) International application number:
**PCT/CN2023/137330**

(87) International publication number:
**WO 2024/131565 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.12.2022  CN 202211667903**

(71) Applicant: **BIGO TECHNOLOGY PTE. LTD.**
**Singapore 117440 (SG)**

(72) Inventors:
• **TAN, Haoxian**
  **Guangzhou, Guangdong 511442 (CN)**
• **LI, Yule**
  **Beijing 100102 (CN)**
• **XIANG, Wei**
  **Guangzhou, Guangdong 511442 (CN)**

(74) Representative: **Yang, Shu**
**Withers & Rogers LLP**
**2 London Bridge**
**London SE1 9RA (GB)**

(54)  **GARMENT IMAGE EXTRACTION METHOD AND APPARATUS, AND DEVICE, MEDIUM AND PRODUCT**

(57)  The present application relates to a garment image extraction method and apparatus, and a device, a medium and a product. The method comprises: acquiring an original image, wherein the original image comprises garment content; converting the original image into a specification image, from which edge sawteeth in image content of the original image are eliminated; optimizing the contrast of the specification image, so as to obtain an enhanced image; merging the specification image and the enhanced image and inputting same into an image segmentation model, so as to determine a target image mask corresponding to a depth of field at which a visible wearing part constituting a garment in the garment content is located; and extracting a garment main-body image from the garment content according to the target image mask. The present application can accurately extract a garment main-body image of a visible wearing part from an original image, which comprises garment content, and the obtained garment main-body image is natural and fine, thereby providing reliable materials for a virtual fitting technique. Therefore, the present application has a wide range of application scenarios, and a lower implementation cost.

**EP 4 641 495 A1**

FIG. 2

**Description**

The present disclosure claims priority to Chinese Patent Application No. 202211667903.6, filed on December 23, 2022, the disclosure of which is herein incorporated by reference in its entirety.

**TECHNICAL FIELD**

Embodiments of the present disclosure relate to the technical field of virtual fit, in particular, relate to a method, an apparatus, and a device for extracting a garment image, and a medium and a product thereof.

**BACKGROUND**

With improvement of a computing power of computers, virtual fit technologies are widely used. In the virtual fit technologies, a basic requirement is extracting a garment foreground image of a worn-visible portion of a garment from an image including garment content, and the partial image is conveniently composited with a model body image to acquire a model-in-garment image, such that a visual image of wearing a corresponding cloth by a model is shown. Furthermore, the model-in-garment image is determined as a commodity image of a corresponding commodity and is published to an e-commerce platform or an advertising platform. Users evaluate a layout of the corresponding clothes based on the visual effect and decide whether to buy it.

The corresponding garment foreground image is acquired by segmenting the image including garment content using an image segment technology. In some practices, the image including garment content is segmented by two types of technologies. In a first type of technologies, whether each pixel point is a foreground or a background is identified based on multi-class tasks, and image content of the clothes belonging to the foreground is determined as a target image for composition with the model. In a second type of technologies, a quantized value of each pixel point belonging to a to-be-extracted foreground pixel point is determined based on pixel quantization using an image matting algorithm, such that information of the corresponding pixel point is extracted based on the quantized value.

In the first type of technologies, the garment foreground image acquired based on discrete values 0 or 1 corresponding to pixel points in a binary classification result has obvious edge aliasing, and thus an image quality is poor, for example, the aliasing effect is more obvious in a high-resolution image. In addition, the type of technologies are weak for complex classification cases. For example, some garment images that are flatly laid and shot directly contain visible portions of the clothes after being worn by a human body (for example, the image of the foreground of the human body), and also contain a worn-invisible portion that may be covered by the neck, hands and other portions by the human body (for example, the garment image behind the neck). Only the worn-visible portion form the garment foreground image. For the image, the invisible portions do not need to be cropped in compositing the image with the model body image, and thus a composition efficiency is significantly improved. Thus, the first type of technologies are inapplicable to cases where the background, the worn-visible portion, the worn-invisible portion, and a plurality of depths of field are present.

In the second type of technologies, the acquired garment foreground image is more natural, but the multi-class tasks are not trained. Thus, for the purpose of acquiring the quantized value of each pixel point, a labeling cost is higher, and edge information needs to be carefully labeled, such that an image boundary is prone to blurring. Therefore, the high-quality garment foreground image is not acquired only using the second type of technologies.

Thus, the existing methods for extracting a garment image need to be comprehensively improved to acquire a great applicable effect.

**SUMMARY**

Embodiments of the present disclosure provide a method, an apparatus, and a device for extracting a garment image, and a medium and a product thereof to solve above problems.

In an aspect of the present disclosure, a method for extracting a garment image is provided. The method includes:

acquiring an original image, wherein the original image contains garment content;
converting the original image to a standardized image with edge aliasing in image content being smoothed;
acquiring an enhanced image by optimizing a contrast of the standardized image;
combining the standardized image and the enhanced image and input the combined image to an image segmentation model to determine a target image mask corresponding to a depth of field where a worn-visible portion of a garment is located in the garment content; and
extracting a garment foreground image from the garment content based on the target image mask.

In an aspect of the present disclosure, an apparatus for extracting a garment image is provided. The apparatus includes:

an original image acquiring module, configured to acquire an original image, wherein the original image contains garment content;

an original image denoising module, configured to convert the original image to a standardized image with edge aliasing in image content being smoothed;

an original image enhancing module, configured to acquiring an enhanced image by optimizing a contrast of the standardized image;

a segmenting module, configured to combine the standardized image and the enhanced image and input the combined image to an image segmentation model to determine a target image mask corresponding to a depth of field where a worn-visible portion of a garment is located in the garment content; and

an image extracting module, configured to extract a garment foreground image from the garment content based on the target image mask.

In an aspect of the present disclosure, a device for extracting a garment image is provided. The device includes: a central processing unit and a memory, wherein the central processing unit is configured to call and run one or more computer programs in the memory to perform the method for extracting the garment image according to the present disclosure.

In an aspect of the present disclosure, a non-transitory readable storage medium is provided. The non-transitory readable storage medium stores one or more computer programs which are implemented by the method for extracting the garment image in a computer-readable instruction form, wherein the one or more computer programs, when called and run by a computer, cause the computer to perform the method.

In an aspect of the present disclosure, a computer program product is provided. The computer program product includes one or more computer programs/instructions, which when loaded and run by a processor, cause the processor to perform the method for extracting the garment image according to any embodiment of the present disclosure.

Compared with some practices, the present disclosure has, but does not limit to have, the following technical effects.

First, the original image containing the garment content is scaled to the standardized image, possible edge aliasing formed in the scaling process are smoothed, the contrast of the image is optimized on the basis of the standardized image to clear shading features, such that the enhanced image is acquired. Then, the standardized image and the enhanced image are combined and input to the image segmentation model to predict the target image mask corresponding to the depth of field where the worn-visible portion of the corresponding garment is located in the garment content, the garment foreground image corresponding to the worn-visible portion in the garment content is accurately extracted based on the target image mask, and the acquired garment foreground image has a high image quality.

Furthermore, the image segmentation model is to generate the target image mask corresponding to the worn-visible portion of the garment, and is capable of determining the corresponding target image mask based on the depth of field determined based on the image information, that is, the standardized image and the enhanced image. The mask uses the deep semantics provided by the clear image with aliasing being smoothed and the deep semantics provided by the enhanced image with a brightness or darkness contrast being optimized on the basis of the clear image. The corresponding quantized value of the depth of field is accurately represented for each pixel in the acquired target image mask by reasoning using the two types of deep semantics, and the image effect of the garment foreground image extracted using the values is more natural and delicate.

In addition, in the present disclosure, the image segmentation model is configured to process the segmentation task of the garment foreground image to effectively separate different depths of field, such that the implementation cost of extracting the garment foreground image is reduced, and the method is applicable to application scenarios, for example, fit applications, online fit in the e-commerce platform, and the like to acquire economies of scale and improve the user experience.

## BRIEF DESCRIPTION OF THE DRAWINGS

For a clearer description of the technical solutions according to the embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 is a schematic diagram of a network architecture of an application environment according to some embodiments of the present disclosure;

FIG. 2 is a schematic diagram of a flowchart of a method for extracting a garment image according to some embodiments of the present disclosure;

FIG. 3 is a schematic diagram of a flowchart of training an image segmentation model according to some embodiments of the present disclosure;

FIG. 4 is a schematic diagram of a flowchart of converting label information to a real mask group according to some embodiments of the present disclosure;

FIG. 5 is a schematic diagram of a flowchart of calculating a total loss value of an image segmentation model according to some embodiments of the present disclosure;

FIG. 6 is a schematic diagram of a flowchart of compositing a target image mask according to some embodiments of the present disclosure;

FIG. 7 is a schematic diagram of a flowchart of extracting a garment foreground image based on a target image mask according to some embodiments of the present disclosure;

FIG. 8 is a block diagram of an apparatus for extracting a garment image according to some embodiments of the present disclosure; and

FIG. 9 is a schematic structural diagram of a device for extracting a garment image according to some embodiments of the present disclosure.

## DETAILED DESCRIPTION

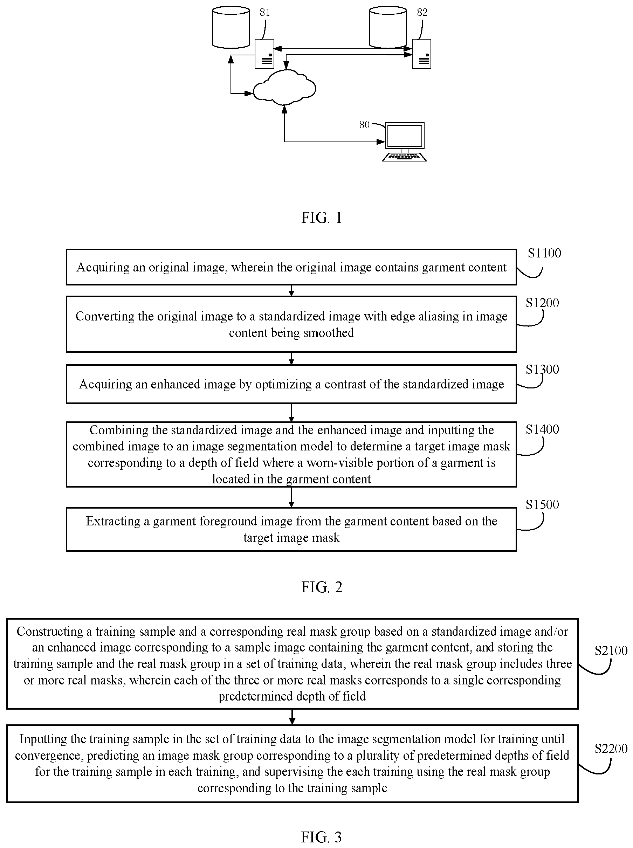

Referring to FIG. 1, the network architecture of an application scenario according to the present disclosure includes a terminal device 80, a business server 81, and an application server 82. The application server 82 is used to deploy a garment image extraction service and provide corresponding functional plug-ins to downstream businesses implemented on the business server 81, such that the garment image extraction service is invoked by the functional plug-ins. In a case where the user accesses a corresponding page of the downstream business of the business server 81 from the terminal device 80, the original image containing the garment content is uploaded by the function plug-in, and then the business server 81 invokes the garment image extraction service opened by the application server 82 and extracts the garment foreground image in the garment content based on the original image extraction service.

The garment image extraction service in the present disclosure is implemented by performing the method for extracting the garment image according to the present disclosure. In particular, the garment image extraction service in the present disclosure is implemented as a computer program product, and the computer program product is installed in a corresponding device, for example, the application server. In a case where the application server operates, the method is performed, and the garment image extraction service is opened.

The downstream business may be a variety of businesses, for example, an online store business of an e-commerce platform, a network sales business in a direct broadcasting room in live video streaming, a matting business in an image processing support platform, and the like. As a basic technology, the garment image extraction service implemented in the present disclosure is invoked by any downstream business.

In another illustrative network architecture of the present disclosure, the garment image extraction service in the present disclosure is deployed in the terminal device, the application server, or any other intelligent device for implementing, as long as the deployed device can provide sufficient hardware and software resources to implement the garment image extraction service.

The models referenced or may be referenced in the present disclosure, for example, the image segmentation model and the matting model modeled by a matting algorithm in the present disclosure, are traditional machine learning models or deep learning models. Unless expressly specified, the models are deployed on remote servers and remotely invoked on clients, or are deployed on clients having corresponding device capabilities for directly invoking. In some embodiments, when the model runs on the client, the corresponding intelligence is acquired by transfer learning, such that a requirement on hardware running resources of the client is reduced to avoid excessive occupation of the hardware running resources of the client.

Referring to FIG. 2, FIG. 2 is a schematic diagram of a flowchart of a method for extracting a garment image according to some embodiments of the present disclosure. In some embodiments, the method includes the following processes.

In S1100, an original image is acquired, wherein the original image contains garment content.

The original image generally contains the garment content, that is, image content for identifying the garment product by the human eyes. The garment content is a garment flat-lay image, that is, a product image for completely displaying the garment product from a perspective, or a real-scene dressed image, that is, an image in which the garment product is wearing on the body of the model and appearing together with the body of the model.

It should be conceptually virtually understood, using a plurality of different predetermined depths of field as layers, that the original image at least includes a plurality of layers corresponding to the plurality of predetermined depths of field. A specific quantity of the predetermined depths of field is determined according to needs. In some embodiments, three predetermined depths of field are present. A first depth of field is used to indicate the background content in the image, that is, indicate the depth of the background image visually behind the content of the garment, and is usually understood as the depth corresponding to the background of the garment content. A second depth of field is used to indicate a worn-invisible portion of the garment content in the image, is determined based on the garment content, and mainly refers to the depth of the portion blocked by the body after the garment content is worn to the human body, which is referred to as a worn-invisible portion. A third depth of field is used to indicate the visible portion of the dressed garment of the garment content in the image, and is the foreground of the original image. For the garment content, the third depth of field refers to the depth of the portion not blocked by the body point after the garment content is worn to the human body, which is referred to as a worn-visible portion.

In the present disclosure, image segmentation is performed on any depth of field to acquire image content of the corresponding layer. For example, for the original image containing the garment content, in a case where the layer corresponding to the third depth of field is extracted, the acquired image is the garment foreground image, that is, the garment foreground image of the visible portion not blocked by the body point after the corresponding garment content is worn to the human body.

In S1200, the original image is converted to a standardized image with edge aliasing in image content being smoothed.

Due to the requirement of the downstream business, the original image containing the garment content generally has a high-definition resolution, for example, greater than 2K resolution, and image segmentation model used to process the garment content generally processes input data with a less scale to improve the processing efficiency. In the process of scaling the original image, various scaling algorithms often introduce obvious edge aliasing on the original image, such that the noise is increased in the scaled standardized image, the quality of the image decreases, and the edge aliasing occurs. Therefore, a bilinear interpolation algorithm is used in the process of scaling the original image to perform denoising to smooth the edge aliasing and acquire the high-quality standardized image.

In mathematics, the bilinear interpolation algorithm is a linear interpolation extension of an interpolation function with two variables, and the core idea is to perform linear interpolation once in each direction. Illustratively, assuming that a size of the original image is m*n, and a size of the target standardized image is a*b, then ratios of lengths of edges of the two images are m/a and n/b. It should be noted that the ratios are usually not an integer and are stored programmatically in a floating-point form. A $(i,j)^{th}$ pixel point of the standardized image corresponds to the original image by the ratios of lengths of edges, and the corresponding coordinates are:

$$\left(i * \frac{m}{a}, j * \frac{n}{b}\right) \quad.$$

Obviously, the corresponding coordinates are usually not integers, and the non-integer coordinates may not be used in the discrete data such as images. The bilinear interpolation algorithm calculates values (gray values or RGB values) of the pixel point where the corresponding coordinates are located by finding four pixel points nearest to the corresponding coordinates in the original image. Assuming that the corresponding coordinates of the given pixel point are (2.5, 4.5), then the four nearest pixel points are (2, 4), (2, 5), (3, 4), (3, 5). Using an example where the image is a grayscale image, the grayscale values of the pixel (i,j) are calculated by the following formula:

$$f(i,j) = w1 * p1 + w2 * p2 + w3 * p3 + w4 * p4.$$

$pi(i = 1,2,3,4)$ represents four nearest pixel points, and $wi(i = 1,2,3,4)$ represents the corresponding weights. As $f(i,j)$ is determined based on the pixel values of the surrounding pixel points, the standardized image acquired by scaling the original image shows a smoother image transition effect.

It should be understood that the bilinear interpolation algorithm is used to convert the scale of the original image to acquire the standardized image corresponding to the target scale, such that transition between pixel points is smoother, the edge aliasing in the image content is effectively smoothed, the matting effect of the garment image is facilitated, and the image quality of the final garment foreground image is more delicate and natural.

In S1300, an enhanced image is acquired by optimizing a contrast of the standardized image.

In the implementation of the shooting environment, a boundary of a foreground image and a boundary of a background image are often not clear due to the light in shooting process, a small color difference between the garment and the background (for example, beige white garment and an offwhite background wall), and the like, such that the image segmentation model fails to perform image segmentation. Therefore, on the basis of the standardized image of the original image, the brightness or darkness contrast of the image is improved in the present disclosure to acquire the enhanced image, and the enhanced image, together with the standardized image is input to the image segmentation model in an input path different from an input path of the standardized image for image segmentation to ensure an accuracy and a success rate of the image segmentation.

In some embodiments, for the standardized image, a defogging algorithm is used to improve the contrast of the standardized image to acquire the corresponding enhanced image. The available defogging algorithms mainly include various types of defogging algorithms based on image enhancement, image restoration, and a convolutional neural network (CNN).

The defogging algorithm based on image enhancement is to highlight details of the image using an image enhancement technology to improve the contrast, such that the image is clearer. The kind of algorithms have a wide application range. In some embodiments, the algorithms include a Retinex algorithm, a histogram equalization algorithm, a partial differential equation algorithm, a wavelet transform algorithm, and the like. The Retinex algorithm eliminates an effect of reflection components and achieves an effect of image enhancement and defogging based on an imaging principle. The histogram equalization algorithm uniformizes pixel distribution of the image and enlarges details of the image. The partial differential equation algorithm determines the image as a partial differential equation and improves the contrast by calculating a gradient field. The wavelet transform algorithm decomposes the image and enlarges useful portions.

The defogging algorithm based on the image restoration mainly observes and summarizes a large number of fog images and fog-free images using an atmospheric scattering physics model to acquire some mapping relationships, and then an inverse operation is performed based on a forming process of the fog image to restore clear images. The most classic algorithm is a dark channel prior defogging algorithm in which a prior relationship between the fog-free image and some parameters in the atmospheric scattering model is acquired by analyzing features of a large number of fog-free images, and the algorithm has low complexity and a great defogging effect.

The defogging algorithm based on the CNN establishes an terminal-to-terminal model using a CNN and recovers the fog-free image based on the fog image. The algorithm defogs the image using the neural network in following two ways. The algorithm generates some parameters of the atmospheric scattering model using the CNN and then restores the fog-free image based on the atmospheric scattering model, or the algorithm directly generates a clear fog-free image based on a fuzzy image using the CNN.

It can be seen that the enhanced image with the improved brightness or darkness contrast compared with the standardized image is acquired using any feasible defogging algorithm based on advantages of various defogging algorithms and specific requirements, such that the image content is clearer, the contrast effect between brightness or darkness is more obvious, and the boundary is clearer.

In S1400, the standardized image and the enhanced image are combined and input to an image segmentation model to determine a target image mask corresponding to a depth of field where a worn-visible portion of a garment is located in the garment content.

The image segmentation model in the present disclosure is constructed by a deep learning model, and may be a series of U-net models, which includes U-net, U2-net, and the like. An encoding path for image down-sampling is implemented in the model based on an architecture of U-net, and the encoding path is cascaded by encoders corresponding to a plurality of scales, such that a sampling feature map of an input image is acquired at the plurality of scales. Meanwhile, a decoding path corresponding to the encoding path for up-sampling the sampling feature map is also implemented, and the decoding path is cascaded by decoders corresponding to the plurality of scales similarly.

In the encoding path, a higher-scale encoder is used for down-sampling a feature map of the image at the corresponding scale, and then transmitting the down-sampled feature map to a next level, that is, an encoder corresponding to a lower scale, for further down-sampling. Meanwhile, the higher-scale encoder is further used for transmitting a feature map acquired by the encoder to a decoder at the corresponding scale in the decoding path through cross-layer connection. The encoding path samples the feature maps of the corresponding scales step by step by the encoders at various levels, and acquires a feature map corresponding to a minimum scale by the encoder at the last level. A feature of a lowest scale is converted and input to the decoding path to be determined as underlying semantic information of the decoding path for ascending sampling.

In the decoding path, a higher-scale encoder is used for receiving a feature map of a next lower scale at the corresponding scale, up-sampling the feature with a next lower scale with reference to the feature map transmitted by the encoder of the corresponding scale through the cross-layer connection, restoring the feature map of the corresponding scale, outputting the feature map of the corresponding scale to the decoder of a higher scale for further decoding, and so on, until a last decoder decodes. In the decoding process, each decoder may segment a group of scale masks corresponding to the scale.

Finally, various groups of scale masks corresponding to different scales acquired by the decoders in the decoding path are fully connected, and the image mask group corresponding to the entire input image is acquired. A single input image is represented as a three-dimensional data structure of $H * W * C$ when being input, which represents a height, a width, and a quantity of channels of the image, and the image mask group is similarly represented as a three-dimensional data structure of $H * W * C$. The input and the output differ in that the quantity of channels of the image mask group is accordingly generated based on a plurality of predetermined depths of field, such that the feature map $H * W$ corresponding to each channel constitutes a single image mask, and the entire image mask group is composed of C image masks of a $H * W$ size. For pixel points, values of different channels on the same pixel point are element values represented by vectors corresponding to different predetermined depths of field of the pixel points.

The image segmentation model in the present disclosure has a parallel processing capability. In a case where two images are combined and input to the model, the two images are processed in parallel to acquire corresponding image mask groups. Therefore, for improvement of an execution efficiency of the computer, channels of the standardized image of the original image and the enhanced image are combined to acquire H*W*2C image data, and the data is input to the image segmentation model. Accordingly, an H*W*2C image mask result is acquired, and the result includes the image mask group of the standardized image and the image mask group of the enhanced image. Both image mask groups include image masks corresponding to a plurality of predetermined depths of field. That is, for the same depth of field, the standardized image and the enhanced image have corresponding image masks. Therefore, for the target depth of field where the garment foreground image is located, the two image masks corresponding to the target depth of field, that is, the image mask of the standardized image corresponding to the target depth of field and the image mask of the enhanced image corresponding to the target depth of field, are directly invoked to comprehensively determine the target image mask corresponding to the garment foreground image.

For comprehensive utilization of the superior features of the standardized image and the enhanced image, in a process of determining the target image mask, the two image masks corresponding to the target depth of field are linearly fused, and the target image mask of the image content that accurately indicates the garment foreground image is acquired using the superior semantic features of the standardized image and the enhanced image through linear fusion.

In S1500, a garment foreground image is extracted from the garment content based on the target image mask.

A scale of the target image mask is the same as a scale of the standardized image and a scale of the enhanced image. The scale of the target image mask is converted according to needs based on different original images that need to extract the garment foreground image. For example, in a case where a target original image is the original image, the target image mask is converted to the same scale as the original image. In some embodiments, in a case where the scale of the target image mask is converted, the bilinear interpolation algorithm is used to perform scale processing to avoid the aliasing in the acquired result.

The target image mask indicates a target region of the worn-visible portion of the garment and a quantized value of the depth of field of the pixel point belonging to the target depth of field in the target region. The pixel-level smooth fusion is performed based on the quantized value of the depth of field and the target original image, that is, any of the original image, the standardized image, and the enhanced image. The garment foreground image is extracted from the target original image to achieve matting.

In some embodiments, considering that the garment foreground image is a continuous region, the target image mask is filtered before matting to delete a connected region with a small area and retain the region with a large area, such that unnecessary interference images carried in the acquired garment foreground image are avoided.

It can be seen based on above embodiments that the present disclosure has, but does not limit to have, the following technical effects.

First, the original image containing the garment content is scaled to the standardized image, possible edge aliasing formed in the scaling process are smoothed, the contrast of the image is optimized on the basis of the standardized image to clear shading features, such that the enhanced image is acquired. Then, the standardized image and the enhanced image are combined and input to the image segmentation model to predict the target image mask corresponding to the depth of field where the worn-visible portion of the corresponding garment is located in the garment content, the garment foreground image corresponding to the worn-visible portion in the garment content is accurately extracted based on the target image mask, and the acquired garment foreground image has a high image quality.

Furthermore, the image segmentation model is to generate the target image mask corresponding to the worn-visible portion of the garment, and is capable of determining the corresponding target image mask based on the depth of field determined based on the image information, that is, the standardized image and the enhanced image. The mask uses the deep semantics provided by the clear image with aliasing being smoothed and the deep semantics provided by the enhanced image with a brightness or darkness contrast being optimized on the basis of the clear image. The corresponding quantized value of the depth of field is accurately represented for each pixel in the acquired target image mask by reasoning using the two types of deep semantics, and the image effect of the garment foreground image extracted using the values is more natural and delicate.

In addition, in the present disclosure, the image segmentation model is configured to process the segmentation task of the garment foreground image to effectively separate different depths of field, such that the implementation cost of extracting the garment foreground image is reduced, and the method is applicable to application scenarios, for example, fit applications, online fit in the e-commerce platform, and the like to acquire economies of scale and improve the user experience.

On the basis of any embodiment of the present disclosure, referring to FIG. 3, prior to combining the standardized image and the enhanced image and inputting the combined image to the image segmentation model, the method further includes the following processes.

In S2100, a training sample and a corresponding real mask group are constructed based on a standardized image and/or an enhanced image corresponding to a sample image containing the garment content, and the training sample and the real mask group are stored in a set of training data, wherein the real mask group includes three or more real masks, wherein each of the three or more real masks corresponds to a single corresponding predetermined depth of field.

The image segmentation model in the present disclosure is pre-trained. Before the image segmentation model is trained, the corresponding training sample needs to be constructed and is stored in the set of training data. Then, the image segmentation model is iteratively trained using the training sample in the set of training data to achieve convergence. Thus, the image segmentation model is suitable for online reasoning.

The training sample is constructed based on pre-acquired sample images. The sample image is constructed using two types of materials. A first type of material is the garment flat-lay image as mentioned above, and a second type of material is the real-scene dressed image as mentioned above. The materials are selected according to needs to ensure that the materials are capable of comprehensively generalizing the image features of the garment content, and the materials are determined as the sample images. By constructing the training sample using the two types of materials to train the image segmentation model, the image segmentation model segments the garment foreground image for the garment flat-lay image and segments the garment foreground image for the real-scene dressed image.

On the basis of determining the sample image, each sample image is further converted to a corresponding standardized image by the method mentioned above in the present, the bilinear interpolation algorithm is used to eliminate aliasing information in the converting process, and the enhanced image is further acquired based on the standardized image.

In a process of constructing each training sample, a single map is used as the training sample, that is, the standardized image of the sample image or the corresponding enhanced image is used as the training sample, or the standardized image of the sample image and the enhanced image generated based on the standardized image are jointly used to form the training sample.

The sample image acquires label information by manual label. That is, the image content is manually labeled based on the sample image, and class labels corresponding to different depths of field are labeled based on the different depths of field of image regions corresponding to different image content. In the manual labeling process, the class labels are represented by discrete data, for example, 0, 1, 2..., or are labeled as enumerated values. Subsequently, the real mask group corresponding to the training sample is generated based on the label information.

The adaptive training sample is composed of a single image or a plurality of images, and a corresponding real mask group is determined based on the corresponding label information of each image. Each real mask group includes a plurality of real masks corresponding to different predetermined depths of field.

Using the real mask group of a single image as an example, the real mask group includes a plurality of real masks corresponding to a plurality of depths of field, and a quantity of the depths of field is three or more according to needs. In the present disclosure, each pixel value in each real mask in the real mask group generated based on the label information is represented by a binarization. Therefore, each pixel value is represented by a vector composed of binarizations of a plurality of depths of field. For example, in a case where three predetermined depths of field are present, the pixel value is represented by $\{1,0,0\}$. Considering that the same pixel point only belongs to a depth of field, the vector representation actually constitutes a one-hot encoded vector, and the element values provide supervision information to predict each corresponding depth of field, the real mask group provides a supervision label based on a multi-class task for the image mask predicted by the image segmentation model. The training and supervision are also performed based on the real mask group and similarity, intersection of union, and the like of the image mask groups predicted by the image segmentation model according to needs.

After the training sample and the corresponding real mask group are acquired, the training sample and the corresponding real mask group are constructed as mapping relationship data and stored in a set of training data, such that the set of training data contains massive training samples that is sufficient to train the image segmentation model to a converged state and the real mask group. The image segmentation model is quickly trained to the converged state using enriched sample features provided by the massive training samples.

In S2200, the training sample in the set of training data is input to the image segmentation model for training until convergence, an image mask group corresponding to a plurality of predetermined depths of field is predicted for the training sample in each training, and the each training is supervised using the real mask group corresponding to the training sample.

In a case where the image segmentation model needs to be trained, the training samples are invoked from the set of training data successively and input to the image segmentation model for training. After the training sample is input to the image segmentation model, the image segmentation model down-samples and up-samples the training sample to acquire the image mask group corresponding to each training sample. Then, a total loss value is determined by calculating a training loss of the image mask group based on the real mask group corresponding to the training sample, and whether the image segmentation model reaches the converged state is determined based on the total loss value. In a case where the image segmentation model does not reach the converged state, the iterative training is continued, a weight parameter of the image segmentation model in each process is corrected, and so on, until the image segmentation model is trained to the converged state and is used for online reasoning.

Based on above embodiments, the label information of the training sample is represented as a real mask group in the present disclosure, and the real mask group corresponding to the plurality of predetermined depths of field is determined as the supervision label of the training sample, such that the image segmentation model adapts to more than three depths of field to generate the image masks of the corresponding depths of field, and the image segmentation model segments the training sample in a plurality of depths. In a case where the image segmentation model is used for online reasoning, the image segmentation model segments the input standardized image and the enhanced image based on a plurality of depths of field, and accurately distinguishes pixel points at different depths of field to extract the image corresponding to the target depth of field. For example, the garment foreground image corresponding to the worn-visible portion in the garment content is extracted in the present disclosure.

On the basis of any embodiment of the present disclosure, prior to prior to constructing the training sample and the real mask group based on the standardized image and/or the enhanced image corresponding to the sample image containing the garment content, the method further includes the following process.

In S3100, the sample image containing the garment content or the standardized image corresponding to the sample image is rotated.

A plurality of training samples are acquired by rotating the same image content by different angles, and the image features are enriched by the training samples, such that the trained image segmentation model learns a stronger feature representation capability to avoid overfitting of the model. For a training sample, considering that the standardized image and the enhanced image generally require consistency in the perspective, image rotation is performed on the sample image or the standardized image acquired based on the sample image, and then the corresponding enhanced image is further determined based on the standardized image.

According to above embodiments, more training samples are acquired by image rotation, sample features are generalized, data are enhanced, overfitting of the model is avoided, and the model is more robust. The process of the embodiments instead of the data enhancement means of clipping images is introduced in the generating process of training samples because image clipping destroys integrity of the garment content and changes a relationship of the depths of field of the garment content images, and image rotation is used to enrich the training samples and does not destroy the integrity, such that the high-quality of the training samples is ensured, and the performance of image segmentation model is not adversely affected by the data enhancement.

On the basis of any embodiment of the present disclosure, prior to prior to constructing the training sample and the real mask group based on the standardized image and/or the enhanced image corresponding to the sample image containing the garment content, the method further includes the following process.

In S3200, a color-blocked region of the garment content is identified from the sample image containing the garment content or the standardized image corresponding to the sample image, and colors in the color-blocked region is replaced.

The color-blocked design is often used in the garment image, that is, more than two different colors are composited. In a case where the color-blocked position is close to a switching region of different depths of field, the image segmentation model is difficult to effectively distinguish the regions, and may falsely determine the color-blocked region as a region of another depth of field. Therefore, false determination by the image segmentation model is reduced by data enhancement.

In the embodiments, image recognition is performed on the sample image used to generate the training sample or the standardized image of the sample image to identify a color-blocked region in the garment content, an original image of the color-blocked region is extracted, and image corrosion processing is performed on the original image to acquire a corrosion image. Then, a difference between the corrosion image and the original image is calculated to acquire an edge color band of the garment, and the sample image or the standardized image is filled and replaced with different colors based on the edge color band, such that different training samples are acquired to simulate the features that may cause false determination of the image segmentation model, and the improved image segmentation model accurately identifies the different depths of field of the garment content having a color-blocked region after the image segmentation model is trained using the training samples,.

It can be seen based on above embodiments that, the feature of the color-blocked is generalized by replacing the color of the training sample having a color-blocked region, such that more training samples are acquired, the image segmentation model upon training using the training samples accurately adapts to the color-blocked of the garment and accurately distinguishes the depth of field of each pixel point.

On the basis of any embodiment of the present disclosure, prior to prior to constructing the training sample and the real mask group based on the standardized image and/or the enhanced image corresponding to the sample image containing the garment content, the sample image is acquired by any of various methods or combinations thereof. The sample image is acquired by the methods in the following two types of embodiments.

In some embodiments, in S4100, a garment flat-lay image corresponding to the garment content and a model body image are acquired to composite a model-in-garment image, and the sample image is acquired by compositing the model-in-garment image as a foreground with a random background image.

Specifically, garment flat-lay images of different garment products and body images of different models with different postures are prepared to facilitate generation of training samples. Then, any feasible image compositing method is used to composite each garment flat-lay image into a model body image to acquire the corresponding model-in-garment image. A plurality of model-in-garment images are acquired by cross compositing a plurality of garment flat-lay images and a plurality of models body images.

In the process of compositing the model-in-garment image, an image effect of the model-in-garment image conforms to a visual perspective law in the objective physical world, such that image content of the garment region behind the model background does not exists after the garment flat-lay image is fused with the model body image, and the image content of the corresponding worn-invisible portion of the garment is actually deleted to cause the image effect of the whole model body image to be natural and reasonable.

Considering that the background of the model body image is generally less, a large number of background images are prepared to simulate diversity of real scenarios. One of the background images is randomly determined as a random background image, and the model-in-garment image is determined as the foreground and added to the random background image for image composition, such that the corresponding sample image is acquired.

In some embodiments, in S4200, a real-scene dressed image is acquired, a body wearing image is extracted to composite with the real-scene dressed image to acquire a composite sketch, and the sample image is acquired by compositing the composite sketch as a foreground with a random background image.

The real-scene dressed image is collected from a public set of data or shot by oneself, and is usually a real-scene image acquired by shooting an entity person wearing the corresponding garment. The real-scene dressed image is usually limited in number and has less background content. Thus, the background is replaced, and more sample images are composited by a random background image and a body wearing image in the real-scene dressed image.

Therefore, a matting model, such as a Matting model, is used to matt the real-scene dressed image to acquire the body wearing image. Considering that errors of the matting model may cause incomplete of the garment content in the extracted body wearing image, in the embodiments, the composite sketch is acquired by weighted combination of the real-scene dressed image and the body wearing image, such that the garment content recovers to a complete image of the garment as much as possible. The composite sketch is determined as a foreground and combined with a randomly determined background image to acquire the corresponding sample image.

In above embodiments, the corresponding label information of pixel points in the garment flat-lay image and the real-scene dressed image are given in advance. Generally, the label information is given in a simple classification way. For example, the first region is set as label 0, the second region is set as label 1, the third region is set label 3, and so on to indicate that different regions belong to different depths of field. After a new sample image is generated based on the garment flat-lay image and the real-scene dressed image, the new sample image still establishes a mapping relationship with the previously given label information, then a training sample constructed based on the sample image establishes a mapping relationship with the label information, and the real mask group of the training sample is further acquired based on the label information.

It can be seen based on above embodiments of acquiring the sample image that a large number of sample images are acquired by technical means based on the garment flat-lay image pre-labeled with the garment foreground image region and the real-scene dressed image, such that the sample feature is generalized, and the generation cost of the training sample is greatly reduced. The image segmentation model is quickly converged based on the training samples acquired based on the sample image with the generalized feature, such that the training cost is reduced.

On the basis of any embodiment of the present disclosure, constructing the training sample and the corresponding real mask group based on the standardized image and/or the enhanced image corresponding to the sample image containing the garment content includes the following process.

In S2110, label information corresponding to the sample image is acquired, wherein the label information contains class labels corresponding to depths of field of pixel points of the sample image.

In a case where the label information corresponding to the sample image is acquired, the real mask group of the training sample constructed based on the sample image is generated based on the label information corresponding to the sample image.

In some embodiments, the image content in an earlier material of the sample image is manually labeled, and class labels corresponding to different depths of field are labeled based on different depths of field of the image regions corresponding to different image contents. In the manual labeling process, the class labels are represented by discrete data, for example, 0, 1, 2..., or are labeled as enumerated values. For example, a garment foreground image in a sample image is labeled as "2", background content in the sample image is labeled as "0", and midground content between the foreground and background in the sample image is labeled as "1". In a case where the material is scaled into a sample image using the bilinear interpolation algorithm, the region of the label information corresponding to the material is also scaled to ensure that the labeling correspondence is basically unchanged.

In S2120, one-hot encoded vectors of the pixel points in the training sample are constructed based on the class labels in the label information, wherein the training sample is constructed using the sample image, a same position element of the one-hot encoded vectors of all of the pixel points is used to represent a real mask corresponding to a corresponding depth of field, and real masks corresponding to a plurality of depths of field form the real mask group of the training sample.

The label information of the sample image indicates classes of images of the regions in the form of class labels, but the class label of each region is actually a class label of each pixel in the region. Based on such principle, the label information is converted to represent binarizations of pixel points corresponding to different depths of field in the form of one-hot encoded vectors with an unit of a pixel point, and a multi-class label corresponding to the pixel point is formed. For example, assuming that a sample image has the following pixel points, and then the label information is as follows:

$$[1,0,0] \ [1,0,0] \ [0,1,0] \ [0,1,0] \cdots$$

$$[1,0,0] \ [0,1,0] \ [0,0,1] \ [0,0,1] \cdots$$

$$\cdots$$

$$[0,1,0] \ [0,1,0] \ [0,1,0] \ [0,1,0] \cdots$$

$$[1,0,0] \ [1,0,0] \ [0,1,0] \ [0,1,0] \cdots$$

Each vector corresponds to a pixel point, and each vector has three elements corresponding to three depths of field. According to correspondence of positions of elements, binarization values of the same position is viewed from the perspective of correspondence between pixel points to acquire three binarization feature maps, and each feature map is a real mask corresponding to the corresponding depth of field actually. For example, the following is the feature map of distribution of pixel values of the real masks corresponding to the depth of field of a first element position in the above example:

$$1, \ 1, \ 0, \ 0 \cdots$$

$$1, \ 0, \ 0, \ 0 \cdots$$

$$\cdots$$

$$0, \ 0, \ 0, \ 0 \cdots$$

$$1, \ 1, \ 0, \ 0 \cdots$$

It can be seen from above embodiments that all real masks in each real mask group jointly represent the multi-class label corresponding to the pixel points in the image in the corresponding training sample, and the multi-class labels constitute a one-hot encoded vector. Each element value indicates whether the pixel point corresponding to the multi-class label belongs to the depth of field corresponding to the real mask of the element value.

It should be noted that the label information used to generate the real mask group is label information that has correspondence in the same scale with the standardized image or the enhanced image upon conversion of the sample image to the standardized image and/or the enhanced image to form the training sample. That is, in a case where the label information is provided based on the material for generating the sample image or the sample image, the label information needs to be converted to label information of the same scale as the standardized image and the enhanced image, and then the corresponding real mask group is constructed based on the converted result.

It can be seen from above embodiments that the image region is conveniently labeled on the basis of the sample image or an earlier material to acquire the corresponding label information, the label information is encoded based on the label information to acquire data represented by the one-hot encoded vector, that is, to acquire a plurality of real masks corresponding to a plurality of depths of field, the region label information is converted to be in a representation form of the mask and is represented in a form of a three-dimensional array in a data structure, such that operation is more efficient. In the representation result, the real mask group is provided to the image segmentation model and is used as a supervisory label in performing a multi-class task in the training process, such that the image segmentation model is more feasible based on the multi-class task, and the training efficiency is improved.

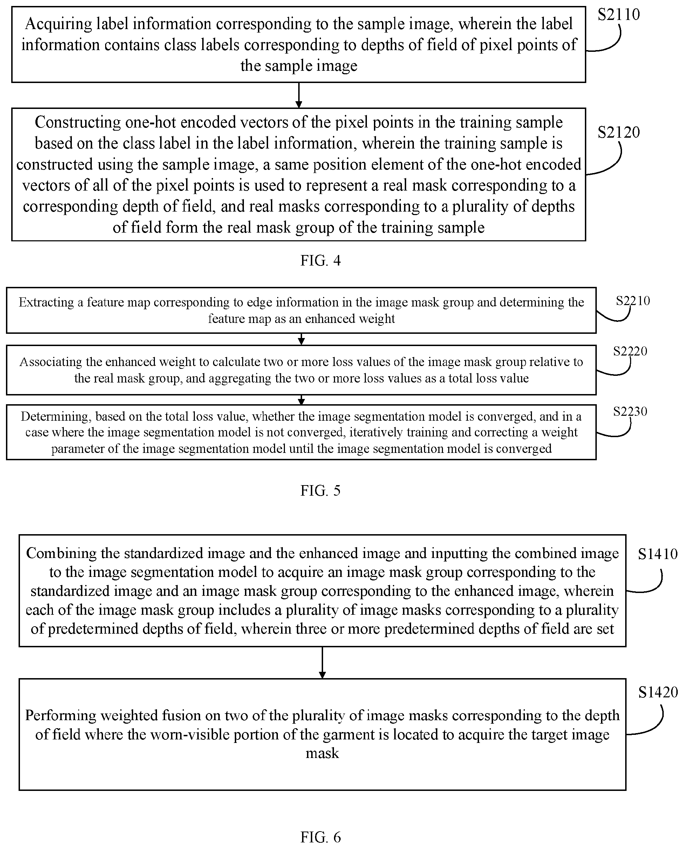

On the basis of any embodiment of the present disclosure, referring to FIG. 5, predicting the image mask group corresponding to the plurality of predetermined depths of field for the training sample in each training, and supervising the each training using the real mask group corresponding to the training sample include the following process.

In S2210, a feature map corresponding to edge information in the image mask group is extracted and determined as an enhanced weight.

In a case where the image segmentation model predicts an image mask group of an image (for example, the standardized image and/or the enhanced image) in a training sample, a pooling layer is used to pool the image mask group to acquire a pooled mask group, such that the edge information is acquired. Then, the pooled mask group is subtracted from the corresponding image mask group until the feature map, which is used as an enhanced weight w for subsequent calculation of the model loss. The formula is:

$$w = (pool(mask) - mask).$$

*mask* represents the image mask group, and *pool* represent the pooling layer.

In S2220, the enhanced weight is associated to calculate two or more loss values of the image mask group relative to the real mask group, and the two or more loss values are aggregated as a total loss value.

The total loss value of each training sample of the image segmentation model is calculated to determine whether the image segmentation model reaches the converged state and implement gradient update of the image segmentation model. The total loss value is determined by comprehensive calculation methods of two or more loss values.

A first loss value is a cross loss value $\mathcal{L}^a_{BCE}$. As the real mask group provides a multi-class label for each pixel in the present disclosure, multi-class training is performed on the image segmentation model to improve training efficiency. Therefore, a cross-entropy loss value corresponding to each pixel point is calculated based on the multi-class label corresponding to the each pixel point to acquire the cross-entropy loss value $\mathcal{L}^a_{BCE}$ of the entire training sample. The formula is:

$$\mathcal{L}^a_{BCE} = -\frac{\Sigma_i^H \Sigma_j^W (1+w_{ij}) \Sigma_c^C (y_c \log(\hat{y}_c))}{\Sigma_i^H \Sigma_j^W (1.5+w_{ij})}.$$

$y_c$ represents the image mask group of the training sample, $\hat{y}_c$ represents the real mask group of the training sample, *H, W* represents two dimensions, that is, the height and the width of the image, *i, j* represents the coordinate position of the pixel point, and $w_{ij}$ represents the corresponding enhanced weight of the pixel. The subsequent formula is the same.

The cross-entropy loss value is used to calculate a class loss for each pixel point to finely constrain a reasoning capability of the model, such that the model classifies the depth of field of each pixel point as accurately as possible.

A second loss value is an intersection of union loss value $\mathcal{L}^a_{IOU}$, and determines the loss value by calculating a ratio of an intersection region and a union region between the predicted image mask group and the real mask group. The formula is:

$$\mathcal{L}^a_{IOU} = 1 - \frac{\Sigma_i^H \Sigma_j^W (y_{ij}\hat{y}_{ij})(1+w_{ij})}{\Sigma_i^H \Sigma_j^W (y_{ij}+\hat{y}_{ij}-y_{ij}\hat{y}_{ij})(1+w_{ij})}.$$

The intersection of union loss value determines the loss value based on a regional relationship of the image mask group and the real mask group to enable the model to balance a predicted regional overall effect.

A third loss value is a similarity loss value $L^a_1$, and determines the loss value by calculating a similarity of the predicted image mask group and the real mask group. The formula is:

$$L^a_1 = \frac{\Sigma_i^H \Sigma_j^W |y_{ij}-\hat{y}_{ij}|w_{ij}}{\Sigma_i^H \Sigma_j^W w_{ij}}.$$

The similarity loss value determines a similarity loss value of the image mask group and the real mask group for each pixel point to enable the model to improve a prediction accuracy of the depth of field of the pixel point.

Considering that the real mask group is in a discrete numerical representation form, and the similarity loss value is calculated using the real mask group represented by a probability value, the real mask group is converted, and interpolation is performed on the original real mask group using a weighted feature of the bilinear interpolation algorithm to convert values of various pixel points of various depths of field to a probability value form and adjust to a numerical representation rang corresponding to the image mask group, for example, [0, 1], such that label softening is achieved, and the real mask group is applicable to calculation of the similarity loss value.

In some embodiments, the cross-entropy loss value and the intersection of union loss value or the similarity loss value are weighted and aggregated to determine the total loss value. In some embodiments, above three loss values are weighted and aggregated to determine the total loss value, and training of the image segmentation model is constrained by a plurality of loss values to ensure that the image segmentation model acquires a more accurate image segmentation capability.

In the process of calculating various loss values, enhanced weights are introduced to weight the corresponding loss values. As the enhanced weights depicts edge information in the image, the image segmentation model pays more attention to edge features in the image, such that the accuracy of edge recognition is improved.

It can be seen based on above calculation principle for determining the total loss value corresponding to the training sample that in the supervision process for each training sample, with the help of the real mask group, each pixel point is converted to a multi-class task, and the multi-class label provided by the real mask group for each pixel point is used to determine a corresponding cross-entropy loss value based on the multi-class task, to determine the intersection of union loss value based on the real mask group according to needs, and to calculate the similarity loss value based on the label softened result of the real mask group, such that the total loss value corresponding to the training sample is determined according to needs. The training of the image segmentation model is jointly constrained from a plurality of aspects using the multi-pronged approach, such that the image segmentation model achieves a more accurate image segmentation effect.

In S2230, whether the image segmentation model is converged is determined based on the total loss value, and in a case where the image segmentation model is not converged, a weight parameter of the image segmentation model is iteratively trained and corrected until the image segmentation model is converged.

After the total loss value is determined, a target threshold used to determine whether the image segmentation model reaches the converged state is compared with the total loss value. In a case where the total loss value reaches the target threshold, the image segmentation model reaches the converged state, the training task is terminated, and the image segmentation model is used in an online reasoning process. In a case where the total loss value does not reach the target threshold, the image segmentation model does not reach the converged state, gradient update is performed on the image segmentation model based on the total loss value, the weight parameter is corrected through backpropagation, and a next training sample is invoked from the set of training data to perform iterative training until the image segmentation model is trained to the converged state.

In some embodiments, the image segmentation model is trained in batches. A plurality of training samples of the same batch are successively input to the image segmentation model to predict the corresponding image mask group, the corresponding real mask group is used to calculate the total loss value corresponding to each training sample, whether the model is converged is not determined for each training sample, and the total loss values of the plurality of training samples are aggregated to the same total loss value to compare with the target threshold to determine whether the model is converged. Thus, a variance of parameter update is reduced to cause convergence of the image segmentation model to be more stable, and effective gradient calculation is performed by highly utilizing a matrix operation to improve the training speed.

It can be seen from above embodiment that in the training process of the image segmentation model, the feature map corresponding to the edge information is depicted based on the image mask group predicted by the image segmentation model based on the training sample and is used as the weight for calculating a plurality of loss values, and the plurality of loss values are aggregated. The total loss value corresponding to the training sample is determined according to needs from the class accuracy of depth of field of the pixel point, the regional class accuracy, the image segmentation accuracy, and other aspects, and whether the image segmentation model is converged or needs the gradient update is determined based on the total loss value, such that the image segmentation model is trained to the converged state quickly, efficiently and at a low cost, and an excellent multi-depth of field image segmentation effect is achieved. With the help of the training sample containing garment content, the image segmentation model is applicable to accurate segmentation of the garment foreground image corresponding to a depth of field for the original image containing garment content.

On the basis of any embodiment of the present disclosure, referring to FIG. 6, combining the standardized image and the enhanced image and inputting the combined image to the image segmentation model to determine the target image mask corresponding to the depth of field where the worn-visible portion of the garment is located in the garment content includes the following process.

In S1410, the standardized image and the enhanced image are combined and input to the image segmentation model to acquire an image mask group corresponding to the standardized image and an image mask group corresponding to the enhanced image, wherein each of the image mask group includes a plurality of image masks corresponding to a plurality of predetermined depths of field, wherein three or more predetermined depths of field are set.

In the embodiments, the image segmentation model is pre-trained to predict image masks corresponding to three depths of field to acquire an image mask group composed of the image masks of three depths of field. The three depths of field correspond to a foreground, a midground, and a background respectively based on depths of angle of real-scene spaces represented by the image. Based on the garment content segmentation in the present disclosure, the foreground is a portion visible to the human eye after the garment is worn, the midground is a portion that is visible before the garment is not worn and is invisible and covered by the human body after the garment is worn, and the background is background content.

In some embodiments, any more than three number that is arbitrarily determined of depths of field are set, and the corresponding training is performed on the image segmentation model so that the model acquires the corresponding reasoning capability.

In a case where the original image is converted to the standardized image, and is then converted to the enhanced image with the same scale as the standardized image, the standardized image and the enhanced image are processed into the image data corresponding to the red, green and blue channels, and then the image data are combined in a direction of the channel to acquire the image data corresponding to the whole training sample. The image data is input to the image segmentation model for reasoning.

The image segmentation model predicts the image mask group corresponding to the image data by down-sampling and up-sampling the image data successively. Similarly, the image mask group is also data of six channels, three of the six channels are the image mask group generated based on the standardized image, and the other three of the six channels are the image mask group generated based on the enhanced image. Unlike the input image data, various channels in the image mask group of the same image correspond to different depths of field in the plurality of predetermined depths of field. Therefore, using three depths of field as an example, a corresponding image mask is acquired at each depth of field, that is, the foreground, the midground, and the background, for each of the two images to form the same pair, and the two images are homologous in image content. Therefore, the image masks of the same pair have semantic mutual reference significance.

In S 1420, weighted fusion is performed on two of the plurality of image masks corresponding to the depth of field where the worn-visible portion of the garment is located to acquire the target image mask.

The garment foreground image needs to be segmented from the given image in the garment content image segmentation task applicable to the present disclosure. The garment foreground image indicates garment content of the visible portions of the garment, and the same pair of image masks corresponding to the depth of field where the garment foreground image is located need to be acquired accordingly. For example, the garment foreground image generally indicates the foreground in the three predetermined depths of field, such that the image masks corresponding to the foregrounds in the standardized image and the enhanced image are invoked respectively, and the weighted fusion is performed on the two image masks corresponding to the foregrounds in combination with the predetermined weight to combine to the same target image mask.

In some embodiments, two image masks of the same depth of field are weighted using the following formula:

$$mask_{total} = \alpha * mask_{x0} + (1 - \alpha) * mask_{y0}.$$

$mask_{total}$ represents the target image mask, $mask_{x0}$ represents the image mask corresponding to the foreground of the standardized image, $mask_{y0}$ represents the image mask corresponding to the foreground of the enhanced image, and $\alpha$ represents the weight used for smoothing.

It can be seen that the target image mask comprehensively uses the semantics of two image masks of the same depth of field, such that the image quality advantages of the standardized image with aliasing being smoothed and the enhanced image with the contrast being optimized are simultaneously utilized, and image extraction is performed on any of the original image, the standardized image, and the enhanced image based on the target image mask to acquire a high-quality garment foreground image.

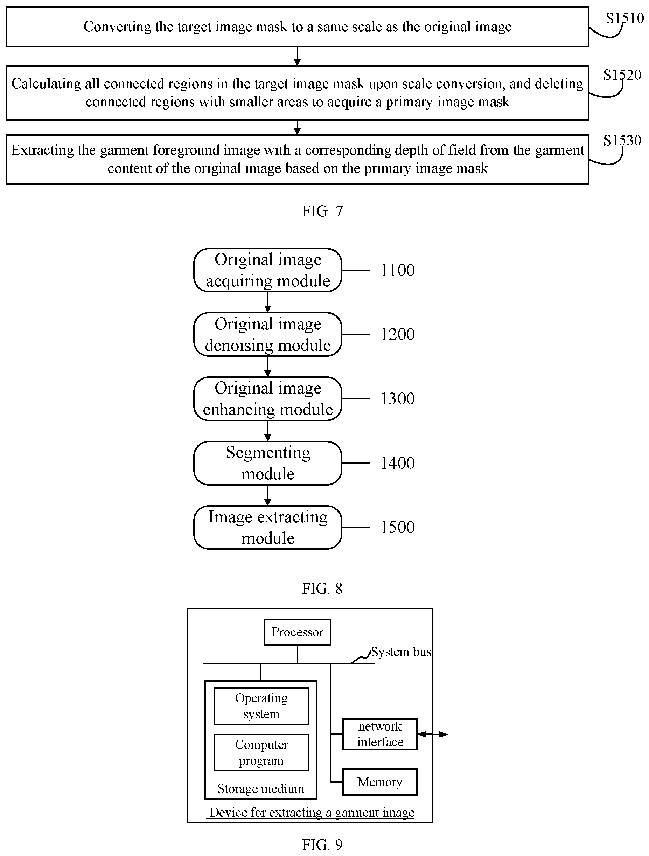

On the basis of any embodiment of the present disclosure, referring to FIG. 7, extracting the garment foreground image from the garment content based on the target image mask includes the following process.

In S1510, the target image mask is converted to a same scale as the original image.

In general, the original image has a higher resolution, and thus has a higher image quality. The garment foreground image is extracted from the original image for the high-quality and the garment image with a larger scale, and the target image mask needs to be converted to the same scale as the original image to perform the image extraction,.

The scale of the target image mask is adjusted, and the bilinear interpolation algorithm is used for interpolation processing. As each pixel point in the image mask predicted by the image segmentation model provides a probability value of a corresponding depth of field, which is a determined value between a specific numerical range, for example, [0,1], the acquired target image mask is also a probability value. Therefore, after the bilinear interpolation algorithm is used to convert the scale of the target image mask, the final target image mask has a flexible quantized numerical of the depth of field, and a more natural and delicate segmentation effect is acquired by performing image segmentation on the target image mask in the method.

In S1520, all connected regions in the target image mask upon scale conversion are calculated, and connected regions with smaller areas are deleted to acquire a primary image mask.

Considering that a ratio of an area of the garment foreground image to a whole image is usually large, the garment foreground image is a continuous region, and other continuous areas may also be represented as the foreground and may also be mis-predicted, all connected regions are calculated based on the target image mask upon scale conversion. Then, based on a predetermined small threshold value, for example, 0.1, all connected regions less than the small threshold are deleted, and other connected regions are reserved to achieve a filtering effect. The filtered mask is used as the primary image mask.

In S1530, the garment foreground image with a corresponding depth of field is extracted from the garment content of the original image based on the primary image mask.

After the primary image mask is determined, image extraction is performed on the original image using the primary image mask to extract the garment foreground image.

It can be seen based on above embodiments that upon scale conversion and filtering of the smaller connected regions, a high-quality primary image mask is acquired based on the target image mask generated on the results predicted by the image segmentation model. As the primary image mask has the technical advantages acquired in all processing processes in the present disclosure, the garment foreground image with a high image quality is extracted from the original image using the primary image mask. The acquired garment foreground image is a visually visible portion after the corresponding garment content is worn to the human body, and excludes the invisible portion after the corresponding garment content is worn to the human body. Therefore, the acquired garment foreground image can be used to provide basic garment images for various downstream tasks to achieve services, for example, virtual fit, and thus the method has a wide range of application scenarios.

Referring to FIG. 8, an apparatus for extracting a garment image according to some embodiments of the present disclosure includes an original image acquiring module 1100, an original image denoising module 1200, an original image enhancing module 1300, a segmenting module 1400, and an image extracting module 1500. The original image acquiring module 1100 is configured to acquire an original image, wherein the original image contains garment content; the original image denoising module 1200 is configured to convert the original image to a standardized image with edge aliasing in image content being smoothed; the original image enhancing module 1300 is configured to acquiring an enhanced image by optimizing a contrast of the standardized image; the segmenting module 1400 is configured to combine the standardized image and the enhanced image and input the combined image to an image segmentation model to determine a target image mask corresponding to a depth of field where a worn-visible portion of a garment is located in the garment content; and the image extracting module 1500 is configured to extract a garment foreground image from the garment content based on the target image mask.

In some embodiments of the present disclosure, prior to the segmenting module 1400, the apparatus for extracting the garment image according to some embodiments of the present disclosure further includes: a sample constructing module, configured to construct a training sample and a corresponding real mask group based on a standardized image and/or an enhanced image corresponding to a sample image containing the garment content, and store the training sample and the real mask group in a set of training data, wherein the real mask group includes three or more real masks, wherein each of the three or more real masks corresponds to a single corresponding predetermined depth of field; and a model training module, configured to input the training sample in the set of training data to the image segmentation model for training until convergence, predict an image mask group corresponding to a plurality of predetermined depths of field for the training sample in each training, and supervise the each training using the real mask group corresponding to the training sample.

In some embodiments of the present disclosure, prior to the sample constructing module, the apparatus for extracting the garment image according to some embodiments of the present disclosure further includes one or any more of: a rotating enhancing module, configured to rotate the sample image containing the garment content or the standardized image corresponding to the sample image; and a color enhancing module, configured to identify a color-blocked region of the garment content from the sample image containing the garment content or the standardized image corresponding to the sample image, and replacing colors in the color-blocked region.

In some embodiments of the present disclosure, prior to the sample constructing module, the apparatus for extracting the garment image according to some embodiments of the present disclosure further includes: a first preparing module, configured to acquire a garment flat-lay image corresponding to the garment content and a model body image to composite a model-in-garment image, and acquire the sample image by compositing the model-in-garment image as a foreground with a random background image; and/or a second preparing module, configured to acquire a real-scene dressed image, extracting a body wearing image to composite with the real-scene dressed image to acquire a composite sketch, and acquire the sample image by compositing the composite sketch as a foreground with a random background image.

In some embodiments of the present disclosure, the sample constructing module further includes: a label acquiring unit, configured to acquire label information corresponding to the sample image, wherein the label information contains class labels corresponding to depths of field of pixel points of the sample image; and a label converting unit, configured to construct one-hot encoded vectors of the pixel points in the training sample based on the class label in the label information, wherein the training sample is constructed using the sample image, a same position element of the one-hot encoded vectors of all of the pixel points is used to represent a real mask corresponding to a corresponding depth of field, and real masks corresponding to a plurality of depths of field form the real mask group of the training sample.

In some embodiments of the present disclosure, the plurality of predetermined depths include a first depth of field indicating background content in an image, a second depth of field indicating an invisible portion of a dressed garment of the garment content in the image, a third depth of field indicating a visible portion of the dressed garment of the garment content in the image.

In some embodiments of the present disclosure, all real masks in the real mask group jointly represent multi-class labels corresponding to pixel points of an image in the corresponding training sample, wherein the multi-class labels form one-hot encoded vectors, and element values respectively represent whether the pixel points corresponding to the multi-class labels belong to depths of field corresponding to the real masks of the element values.

In some embodiments of the present disclosure, the model training module includes: a weight extracting unit, configured to extract a feature map corresponding to edge information in the image mask group and determine the feature map as an enhanced weight; a loss calculating unit, configured to associate the enhanced weight to calculate two or more loss values of the image mask group relative to the real mask group, and aggregate the two or more loss values as a total loss value; and a iteration determining unit, configured to determine, based on the total loss value, whether the image segmentation model is converged, and in a case where the image segmentation model is not converged, iteratively train and correct a weight parameter of the image segmentation model until the image segmentation model is converged.

In some embodiments of the present disclosure, the segmenting module 1400 includes: a reasoning performing unit, configured to combine the standardized image and the enhanced image and input the combined image to the image segmentation model to acquire an image mask group corresponding to the standardized image and an image mask group corresponding to the enhanced image, wherein each of the image mask group includes a plurality of image masks corresponding to a plurality of predetermined depths of field, wherein three or more predetermined depths of field are set; and a fusion processing unit, configured to perform weighted fusion on two of the plurality of image masks corresponding to the depth of field where the worn-visible portion of the garment is located to acquire the target image mask.

In some embodiments of the present disclosure, the image extracting module 1500 includes a scale converting unit, configured to convert the target image mask to a same scale as the original image; a filtering optimizing unit, configured to calculate all connected regions in the target image mask upon scale conversion, and delete connected regions with smaller areas to acquire a primary image mask; and an extraction performing unit, configured to extract the garment foreground image with a corresponding depth of field from the garment content of the original image based on the primary image mask.

Some embodiments of the present disclosure further provide a device for extracting a garment image. As shown in FIG. 9, FIG. 9 is a schematic structural diagram of a device for extracting a garment image. The device for extracting the garment image includes a processor, a computer-readable storage medium, a memory, and a network interface that are connected over a system bus. A non-transitory computer-readable storage medium of the device for extracting the garment image stores an operating system, a database, and computer-readable instructions, and an information sequence is stored in the database. When the computer-readable instructions are loaded and executed by the processor, the processor is configured to perform the method for extracting the garment image.

The processor of the device for extracting the garment image is configured to provide computing and control capabilities to support operation of the entire device for extracting the garment image. The memory of the device for extracting the garment image stores computer-readable instructions, and when the computer-readable instructions are loaded and executed by the processor, the processor is configured to perform the method for extracting the garment image. The network interface of the device for extracting the garment image is configured to communicate with the terminal.

It should be understood by those skilled in the art that the structure shown in FIG. 9 is a block diagram of some of the structures relevant to the scheme according to the present disclosure, and does not constitute a limitation to the device for extracting the garment image applicable to the scheme according to the present disclosure. The device for extracting the garment image includes more or fewer parts than shown in the drawing, or combines some parts, or has different parts arrangements.

The processor in the embodiments is configured to perform specific functions of various modules in FIG. 8, and the memory stores program codes and various types of data required for executing above modules or submodules. The network interface is configured to perform data transmission between user terminals or servers. The non-transitory readable storage medium according to the embodiments stores program codes and data required for executing all modules in the device for extracting the garment image according to the present disclosure, and the server is capable of invoking the program codes and data of the server to perform functions of all modules.

The present disclosure further provides a non-transitory readable storage medium storing computer-readable instructions, which when loaded and executed by one or more processors, cause one or more processors to perform the method for extracting the garment image according to any embodiments of the present disclosure.

The present disclosure further provides a computer program product including computer programs/instructions, which when loaded and run by one or more processors, cause one or more processors to perform the method for extracting the garment image according to any embodiments of the present disclosure.

A person of ordinary skill in the art should understand that all or part of processes in the method embodiments of the present disclosure are performed by instructing the relevant hardware through the computer program. The computer program is stored in a non-transitory readable storage medium, and an executing process of the computer program includes processes of embodiments of the method. The storage medium is a computer-readable storage medium, for example, a disk, an optical disc, a read-only memory (ROM), a random access memory (RAM), and the like.

In summary, the garment foreground image of the worn-visible portion is accurately extracted from the original image containing the garment content, and the acquired garment foreground image is natural and delicate, such that reliable materials are provided for the virtual fit technology, and a wide range of application scenarios and a low implementation cost are achieved.

**Claims**

1. A method for extracting a garment image, comprising:

    acquiring an original image, wherein the original image contains garment content;
    converting the original image to a standardized image with edge aliasing in image content being smoothed;
    acquiring an enhanced image by optimizing a contrast of the standardized image;
    combining the standardized image and the enhanced image and inputting the combined image to an image segmentation model to determine a target image mask corresponding to a depth of field where a worn-visible portion of a garment is located in the garment content; and
    extracting a garment foreground image from the garment content based on the target image mask.

2. The method for extracting the garment image according to claim 1, wherein prior to combining the standardized image and the enhanced image and inputting the combined image to the image segmentation model, the method further comprises:

    constructing a training sample and a corresponding real mask group based on a standardized image and/or an enhanced image corresponding to a sample image containing the garment content, and storing the training sample and the real mask group in a set of training data, wherein the real mask group comprises three or more real masks, wherein each of the three or more real masks corresponds to a single corresponding predetermined depth of field; and
    inputting the training sample in the set of training data to the image segmentation model for training until convergence, predicting an image mask group corresponding to a plurality of predetermined depths of field for the training sample in each training, and supervising the each training using the real mask group corresponding to the training sample.

3. The method for extracting the garment image according to claim 2, wherein prior to constructing the training sample and the real mask group based on the standardized image and/or the enhanced image corresponding to the sample image containing the garment content, the method further comprises one or more of:

    rotating the sample image containing the garment content or the standardized image corresponding to the sample image; and
    identifying a color-blocked region of the garment content from the sample image containing the garment content or the standardized image corresponding to the sample image, and replacing colors in the color-blocked region.

4. The method for extracting the garment image according to claim 2, wherein prior to constructing the training sample and the real mask group based on the standardized image and/or the enhanced image corresponding to the sample image containing the garment content, the method further comprises:

    acquiring a garment flat-lay image corresponding to the garment content and a model body image to composite a model-in-garment image, and acquiring the sample image by compositing the model-in-garment image as a foreground with a random background image; and/or
    acquiring a real-scene dressed image, extracting a body wearing image to composite with the real-scene dressed image to acquire a composite sketch, and acquiring the sample image by compositing the composite sketch as a foreground with a random background image.

5. The method for extracting the garment image according to claim 2, wherein constructing the training sample and the corresponding real mask group based on the standardized image and/or the enhanced image corresponding to the sample image containing the garment content comprises:

acquiring label information corresponding to the sample image, wherein the label information contains class labels corresponding to depths of field of pixel points of the sample image; and

constructing one-hot encoded vectors of the pixel points in the training sample based on the class label in the label information, wherein the training sample is constructed using the sample image, a same position element of the one-hot encoded vectors of all of the pixel points is used to represent a real mask corresponding to a corresponding depth of field, and real masks corresponding to a plurality of depths of field form the real mask group of the training sample.

6. The method for extracting the garment image according to claim 2, wherein the plurality of predetermined depths comprise a first depth of field indicating background content in an image, a second depth of field indicating an invisible portion of a dressed garment of the garment content in the image, a third depth of field indicating a visible portion of the dressed garment of the garment content in the image.

7. The method for extracting the garment image according to claim 2, wherein all real masks in the real mask group jointly represent multi-class labels corresponding to pixel points of an image in the corresponding training sample, wherein the multi-class labels form one-hot encoded vectors, and element values respectively represent whether the pixel points corresponding to the multi-class labels belong to depths of field corresponding to the real masks of the element values.

8. The method for extracting the garment image according to claim 2, wherein predicting the image mask group corresponding to the plurality of predetermined depths of field for the training sample in each training, and supervising the each training using the real mask group corresponding to the training sample comprise:

extracting a feature map corresponding to edge information in the image mask group and determining the feature map as an enhanced weight;

associating the enhanced weight to calculate two or more loss values of the image mask group relative to the real mask group, and aggregating the two or more loss values as a total loss value; and

determining, based on the total loss value, whether the image segmentation model is converged, and in a case where the image segmentation model is not converged, iteratively training and correcting a weight parameter of the image segmentation model until the image segmentation model is converged.

9. The method for extracting the garment image according to any one of claims 1 to 8, wherein combining the standardized image and the enhanced image and inputting the combined image to the image segmentation model to determine the target image mask corresponding to the depth of field where the worn-visible portion of the garment is located in the garment content comprises:

combining the standardized image and the enhanced image and inputting the combined image to the image segmentation model to acquire an image mask group corresponding to the standardized image and an image mask group corresponding to the enhanced image, wherein each of the image mask group comprises a plurality of image masks corresponding to a plurality of predetermined depths of field, wherein three or more predetermined depths of field are set; and

performing weighted fusion on two of the plurality of image masks corresponding to the depth of field where the worn-visible portion of the garment is located to acquire the target image mask.

10. The method for extracting the garment image according to any one of claims 1 to 9, wherein extracting the garment foreground image from the garment content based on the target image mask comprises:

converting the target image mask to a same scale as the original image;

calculating all connected regions in the target image mask upon scale conversion, and deleting connected regions with smaller areas to acquire a primary image mask; and

extracting the garment foreground image with a corresponding depth of field from the garment content of the original image based on the primary image mask.

11. An apparatus for extracting a garment image, comprising:

an original image acquiring module, configured to acquire an original image, wherein the original image contains garment content;

an original image denoising module, configured to convert the original image to a standardized image with edge aliasing in image content being smoothed;

an original image enhancing module, configured to acquire an enhanced image by optimizing a contrast of the standardized image;

a segmenting module, configured to combine the standardized image and the enhanced image and input the combined image to an image segmentation model to determine a target image mask corresponding to a depth where field a worn-visible portion of a garment is located in the garment content; and

an image extracting module, configured to extract a garment foreground image from the garment content based on the target image mask.

12. A device for extracting a garment image, comprising: a central processing unit and a memory, wherein the central processing unit is configured to call and run one or more computer programs in the memory to perform the method for extracting the garment image as defined in any one of claims 1 to 10.

13. A non-transitory readable storage medium, storing one or more computer programs which when called and run by a computer, cause the computer to perform the method for extracting the garment image as defined in any one of claims 1 to 10.

14. A computer program product, comprising: one or more computer programs/instructions, which when loaded and run by a processor, cause the processor to perform the method for extracting the garment image as defined in any one of claims 1 to 10.

FIG. 1

| |
|---|
| Acquiring an original image, wherein the original image contains garment content |

S1100

| |
|---|
| Converting the original image to a standardized image with edge aliasing in image content being smoothed |

S1200

| |
|---|
| Acquiring an enhanced image by optimizing a contrast of the standardized image |

S1300

| |
|---|
| Combining the standardized image and the enhanced image and inputting the combined image to an image segmentation model to determine a target image mask corresponding to a depth of field where a worn-visible portion of a garment is located in the garment content |

S1400

| |
|---|
| Extracting a garment foreground image from the garment content based on the target image mask |

S1500

FIG. 2

| |
|---|
| Constructing a training sample and a corresponding real mask group based on a standardized image and/or an enhanced image corresponding to a sample image containing the garment content, and storing the training sample and the real mask group in a set of training data, wherein the real mask group includes three or more real masks, wherein each of the three or more real masks corresponds to a single corresponding predetermined depth of field |

S2100

| |
|---|
| Inputting the training sample in the set of training data to the image segmentation model for training until convergence, predicting an image mask group corresponding to a plurality of predetermined depths of field for the training sample in each training, and supervising the each training using the real mask group corresponding to the training sample |

S2200

FIG. 3

Acquiring label information corresponding to the sample image, wherein the label information contains class labels corresponding to depths of field of pixel points of the sample image — S2110

Constructing one-hot encoded vectors of the pixel points in the training sample based on the class label in the label information, wherein the training sample is constructed using the sample image, a same position element of the one-hot encoded vectors of all of the pixel points is used to represent a real mask corresponding to a corresponding depth of field, and real masks corresponding to a plurality of depths of field form the real mask group of the training sample — S2120

FIG. 4

Extracting a feature map corresponding to edge information in the image mask group and determining the feature map as an enhanced weight — S2210

Associating the enhanced weight to calculate two or more loss values of the image mask group relative to the real mask group, and aggregating the two or more loss values as a total loss value — S2220

Determining, based on the total loss value, whether the image segmentation model is converged, and in a case where the image segmentation model is not converged, iteratively training and correcting a weight parameter of the image segmentation model until the image segmentation model is converged — S2230

FIG. 5

Combining the standardized image and the enhanced image and inputting the combined image to the image segmentation model to acquire an image mask group corresponding to the standardized image and an image mask group corresponding to the enhanced image, wherein each of the image mask group includes a plurality of image masks corresponding to a plurality of predetermined depths of field, wherein three or more predetermined depths of field are set — S1410

Performing weighted fusion on two of the plurality of image masks corresponding to the depth of field where the worn-visible portion of the garment is located to acquire the target image mask — S1420

FIG. 6

| | |
|---|---|
| Converting the target image mask to a same scale as the original image | S1510 |

| | |
|---|---|
| Calculating all connected regions in the target image mask upon scale conversion, and deleting connected regions with smaller areas to acquire a primary image mask | S1520 |

| | |
|---|---|
| Extracting the garment foreground image with a corresponding depth of field from the garment content of the original image based on the primary image mask | S1530 |

FIG. 7

Original image acquiring module —— 1100

Original image denoising module —— 1200

Original image enhancing module —— 1300

Segmenting module —— 1400

Image extracting module —— 1500

FIG. 8

Processor

System bus

Operating system

Computer program

Storage medium

network interface

Memory

Device for extracting a garment image

FIG. 9

# EP 4 641 495 A1

## INTERNATIONAL SEARCH REPORT

| | International application No. |
|---|---|
| | **PCT/CN2023/137330** |

| A. | CLASSIFICATION OF SUBJECT MATTER |
|---|---|

G06T7/194(2017.01)i; G06T5/00(2024.01)i; G06T3/40(2024.01)i; G06N3/0464(2023.01)i

According to International Patent Classification (IPC) or to both national classification and IPC

| B. | FIELDS SEARCHED |
|---|---|

Minimum documentation searched (classification system followed by classification symbols)

IPC:G06T,G06N

Documentation searched other than minimum documentation to the extent that such documents are included in the fields searched

Electronic data base consulted during the international search (name of data base and, where practicable, search terms used)

CNKI, CNTXT, DWPI, ENTXTC, IEEE: 虚拟试衣, 服装, 图像, 提取, 分割, 抠图, 掩膜, 增强, 边缘, 锯齿, 合并, 融合, 景深, virtual fitting, clothing, image, extract, segmentation, matting, mask, enhancement, edge, serration, depth of field

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116051593 A (BAIGUOYUAN TECHNOLOGY (SINGAPORE) PTE LTD.) 02 May 2023 (2023-05-02) <br> entire document | 1-14 |
| A | CN 102214355 A (XI'AN POLYTECHNIC UNIVERSITY) 12 October 2011 (2011-10-12) <br> description, paragraphs 0034-0055 | 1-14 |
| A | CN 112070793 A (BEIJING UNIVERSITY OF POSTS AND TELECOMMUNICATIONS) 11 December 2020 (2020-12-11) <br> entire document | 1-14 |
| A | CN 109493350 A (CHONGQING ZHONGKE YUNCONG TECHNOLOGY CO., LTD.) 19 March 2019 (2019-03-19) <br> entire document | 1-14 |
| A | CN 114565508 A (BEIJING XINXIA TECHNOLOGY CO., LTD.) 31 May 2022 (2022-05-31) <br> entire document | 1-14 |
| A | US 2008170787 A1 (ARCSOFT INC.) 17 July 2008 (2008-07-17) <br> entire document | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 January 2024** | **08 February 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

23

**INTERNATIONAL SEARCH REPORT**
Information on patent family members

International application No.

**PCT/CN2023/137330**

| Patent document cited in search report | | | Publication date (day/month/year) | Patent family member(s) | | | Publication date (day/month/year) |
|---|---|---|---|---|---|---|---|
| CN | 116051593 | A | 02 May 2023 | None | | | |
| CN | 102214355 | A | 12 October 2011 | None | | | |
| CN | 112070793 | A | 11 December 2020 | None | | | |
| CN | 109493350 | A | 19 March 2019 | None | | | |
| CN | 114565508 | A | 31 May 2022 | None | | | |
| US | 2008170787 | A1 | 17 July 2008 | US | 7809189 | B2 | 05 October 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211667903